# EUROPÄISCHE PATENTSCHRIFT

(11) **EP 0 704 449 B1**
(45) Veröffentlichungstag und Bekanntmachung des Hinweises auf die Patenterteilung: **24.05.2000**
(21) Anmeldenummer: 95114211.6
(22) Anmeldetag: 11.09.1995
(51) Int. Cl.: C07F 9/50

(54) **Verfahren zur Herstellung von Diphosphanen**
Process for the preparation of diphosphanes
Procédé pour la préparation de diphosphanes

(30) Priorität: 29.09.1994 DE 4434844
(43) Veröffentlichungstag der Anmeldung: 03.04.1996
(73) Patentinhaber: Celanese Chemicals Europe GmbH, 60439 Frankfurt am Main (DE)
(72) Erfinder: Naumann, Christoph, Dr., D-65527 Niedernhausen (DE); Regnat, Dieter, Dr., D-65817 Eppstein (DE)

(56) Entgegenhaltungen:
- EP-A- 0 571 819
- EP-A- 0 653 432
- WO-A-87/07600
- WO-A-93/15089
- DE-A- 4 040 315
- US-A- 4 879 416

## Beschreibung

Die vorliegende Erfindung betrifft ein Verfahren zur Herstellung von Verbindungen aus der Reihe der Diphosphane, sowie ihre Verwendung.

Phosphane haben generell eine vielseitige technische Anwendung gefunden. Sie eignen sich beispielsweise als Antioxidantien, Metallextraktionsmittel, Flammschutzimprägniermittel, Stabilisierungsmittel für Olefine (US-6-400,168 NTIS; Chem. Abstr. 100; 122286b) und Trioxan (US 4 125 540), Ausgangsverbindungen für Wittig-Reagentien oder Liganden für Metallkomplexkatalysatoren.

Aufgrund ihrer Formenvielfalt stellen sie auch Vorprodukte zur Herstellung weiterer, gegebenenfalls Phosphor enthaltender, organischer Verbindungen dar.

Innerhalb der Gruppe der Phosphane spielen die Diphosphane aufgrund ihrer stofflichen Eigenschaften eine herausgehobene Rolle. Da in ihrem Molekül zwei trivalente Phosphoratome enthalten sind, besitzen sie gegenüber zahlreichen Metallen und Metallionen, insbesondere solchen aus der Reihe der Übergangsmetalle, komplexierende Eigenschaften. Diese Fähigkeit der Komplexbildung ist auf die Bildung vergleichsweise stabiler Chelate zurückzuführen und kann zur Herstellung entsprechender Metallkomplexkatalysatoren, die in technischen Prozessen Anwendung finden, genutzt werden.

Die EP 0 326 286 betrifft ein Verfahren zur Herstellung von Bidentatliganden der allgemeinen Formel (A) 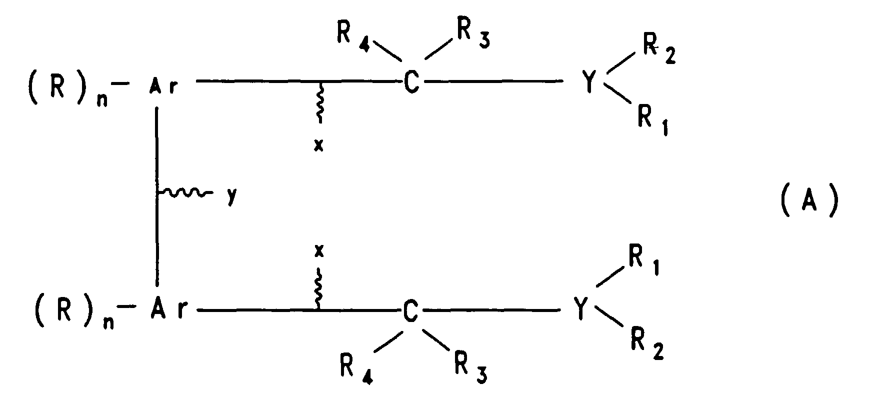 worin Ar eine aromatische Ringverbindung, beispielsweise Phenyl, Naphthyl, Phenantryl und Anthracenyl bedeutet, die mit x und y bezeichneten Bindungen an benachbarte Kohlenstoffatomen der Ringverbindung sitzen, R, R₁ und R₂ für eine Reihe üblicher organischer Substituenten, n für eine ganze Zahl von 0 bis 4, 0 bis 6 oder 0 bis 8 steht, R₃ und R₄ für H oder für R₁ stehen und Y eines der Elemente P, As, Sb und Bi darstellt.
Man setzt eine Verbindung der Formel (B) 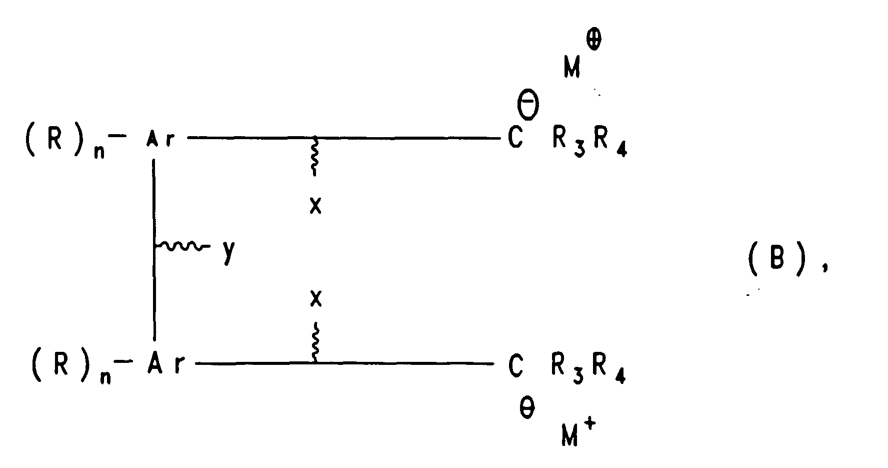 worin M⁺ für Li⁺, Na⁺, K⁺ oder Cs⁺ steht, mit einer Verbindung der Formel (C) 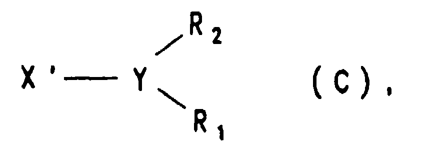 worin X' für Halogen steht, um und erhält symmetrisch substituierte Bidentatverbindungen, respektive symmetrisch substituierte Diphosphane, falls Y Phosphor ist. Derartige, symmetrisch substituierte Bidentatverbindungen, stellen in Verbindung mit Rhodium wirksame Katalysatoren für die insbesondere bei niedrigem Druck durchgeführte Hydroformylierung von Olefinen dar.

Weitere Verfahren zur Herstellung von symmetrisch substituierten Diphosphanen werden in WO-A-8707600 und in US-A-4879416 offenbart.

Außer symmetrisch substituierten Diphosphanen sind in zunehmenden Maße auch unsymmetrisch substituierte Diphosphane von Interesse. So gewinnen neben symmetrisch substituierten Bisphosphinoalkanen insbesondere auch unsymmetrisch substituierte Bisphosphinoalkane, beispielsweise bei der selektiven Herstellung von Ethanol aus Methanol, Kohlenmonoxid und Wasserstoff, in technischen Prozessen an Bedeutung.

Aus der DE-A-4040315 sind sulfonierte Diphosphane als Liganden für Rh-Komplexverbindungen bekannt, die sich von Biarylen ableiten. Symmetrische und unsymmetrische Diphosphane werden als Liganden für Metallkomplexe beschrieben.

Aus der WO-A-9315089 sind unsymmetrische Biphenyl-2,2-diyl-diphosphane als Liganden für Metall-Komplexkatalysatoren bekannt.

In Anbetracht der besonderen Bedeutung, die Verbindungen aus der Reihe der Diphosphane zukommt, stellt es eine lohnende Aufgabe dar, neue Verbindungen aus dieser Gruppe von Stoffen bereitzustellen, um das Spektrum ihrer Anwendungsmöglichkeiten nicht nur zu ergänzen, sondern auch durch eine Nuancierung stofflicher Eigenschaften und Variation struktureller Merkmale zu bereichern und zu erweitern.

Insbesondere stellt es eine interessante Herausforderung dar, die besonderen Eigenschaften symmetrisch substitutierter Diphosphane mit den vorteilhaften Einflüssen, die auf eine unsymmetrische Substitution und damit auf sterische und/oder elektronische Effekte oder eine zusätzlich entstandene Chiralität zurückgehen, so zu vereinen, daß man zu neuen Verbindungen gelangt, die einen noch größeren oder andersgearteten Anwendungsbereich als die symmetrisch substituierten Diphosphane umfassen.

Gelöst wird diese Aufgabe durch die Herstellung von Diphosphanen der allgemeinen Formel (I) 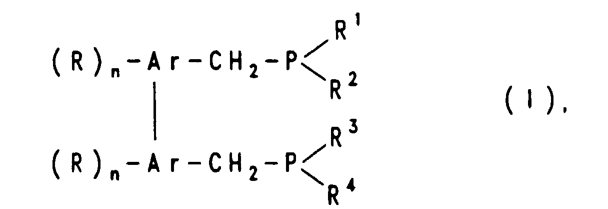 worin Ar-Ar für einen Biphenylrest, einen 1-Phenylnaphthylrest oder einen 1,1'-Binaphthylrest steht, die CH₂-Gruppen jeweils in ortho-Stellung zur Ar-Ar-Bindung angeordnet sind, R für F, einen Alkylrest oder Alkoxyrest mit jeweils 1 bis 8 Kohlenstoffatomen steht, n eine ganze Zahl von 0 bis 4 ist, die Reste PR¹R² und PR³R⁴ voneinander verschieden sind, R¹, R², R³ und R⁴ unabhängig voneinander jeweils für einen Alkylrest mit 1 bis 10 Kohlenstoffatomen, einen cycloaliphatischen Rest mit 5 bis 10 Kohlenstoffatomen, oder für einen Rest Ar¹-(R⁵)ₘ stehen, wobei Ar¹ ein Phenyl- oder Naphthylrest ist, R⁵ für F, Cl, CF₃, SO₃H, SO₃M (M = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹, R², R³ und R⁴ unabhängig voneinander unter Einschluß des jeweils mit ihnen verbundenen P-Atoms einen Ring mit 4 bis 8 Gliedern bilden, an dem gegebenenfalls ein oder zwei aromatische 6 bis 10 Kohlenstoffatome umfassende Ringe oder Ringsysteme anneliert sind.

Die Diphosphane der allgemeinen Formel (I) stellen aufgrund ihres chemischen Verhaltens, das auf den Einbau zweier trivalenter P-Atome in das Molekül zurückzuführen sein dürfte, und wegen ihrer besonderen Struktur interessante Verbindungen dar. Die besondere Struktur der Phosphane geht zum einen auf den -H₂C-Ar(R)ₙ-Ar(R)ₙ-CH₂-Rest und zum anderen auf die beiden unterschiedlichen Reste PR¹R² und PR³R⁴ zurück. Die beiden sich voneinander unterscheidenden Reste PR¹R² und PR³R⁴ führen dazu, daß die Diphosphane der Formel (I) unsymmetrisch substituierte Verbindungen darstellen.

Ein besonderes Merkmal der neuen, erfindungsgemäß hergestellten Diphosphane besteht ferner darin, daß viele dieser Diphosphane ein oder mehrere Asymmetriezentren aufweisen. In einer Reihe von Fällen kann eines der tertiären P-Atome oder beide tertiären P-Atome als Asymmetriezentrum fungieren. In einer Vielzahl von Verbindungen sind jedoch auch Asymmetriezentren vorhanden, die aus der -H₂C-Ar(R)ₙ-Ar(R)ₙ-CH₂-Gruppierung resultieren.

Somit eröffnen die neuen unsymmetrisch substituierten Diphosphane der allgemeinen Formel (I) auch den Zugang zu den entsprechenden optisch aktiven Isomeren, beispielsweise zu diastereomeren Diphosphanen oder zu enantiomeren Diphosphanen, die ihrerseits unter anderem als Hilfsstoffe bei der Durchführung asymmetrischer Synthesen Anwendung finden können.

Darüber hinaus bieten sich die neuen, erfindungsgemäß hergestellten Diphosphane aufgrund ihres chemischen Verhaltens und ihrer Reaktivität und wegen ihrer besonderen Struktur als Bausteine zur Herstellung weiterer, gebenenfalls Phosphor enthaltender, organischer Verbindungen an.

Diphosphane der Formel (I), worin Ar-Ar für einen Biphenylrest, einen 1-Phenylnaphthylrest oder einen 1,1-Binapthylrest und R für einen Alkylrest oder Alkoxyrest mit jeweils 1 bis 4 Kohlenstoffatomen steht, spielen eine besondere Rolle, da sie vergleichsweise leicht zugänglich sind.

Dies trifft auch auf Diphosphane der Formel (I) zu, worin n für 0 oder 1, insbesondere n für 0 steht.

Von Interesse ist auch die Herstellung von Diphosphanen, worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkyrest mit 1 bis 4 Kohlenstoffatomen und m für 0 oder 1 steht, oder R¹ und R² zusammen mit dem P-Atom einen Ring bilden und für CH₂-AR(R)ₙ-Ar(R)ₙ-CH₂ stehen. Die Reste R³ und R⁴ werden aus derselben Gruppe von Resten wie R¹ und R² ausgewählt, jedoch mit der Auflage, daß der Rest PR¹R² vom Rest PR³R⁴ verschieden ist.

Von Interesse ist ferner die Herstellung von Diphosphanen, worin R³ und R⁴ gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, oder R³ und R⁴ zusammen mit dem P-Atom einen Ring bilden und für CH₂-Ar(R)ₙ-Ar(R)ₙ-CH₂ stehen.

Falls die Diphosphane der Formel (I) ein Asymmetriezentrum besitzen und somit die Bedingungen für das Vorliegen optischer Isomerer erfüllen, liegen sie in der (R,S)-Form, in der (R)-Form oder in der (S)-Form vor. Im Zusammenhang mit der Durchführung asymmetrischer Synthesen sind Diphosphane in der (R)-Form und der (S)-Form von Interesse.

Sie lassen sich mit guter Aussicht auf Erfolg sowohl in der (R)-Form oder (S)-Form als optisch aktive Bausteine verwenden, um weitere gegebenenfalls optisch aktive und gegebenenfalls Phosphor enthaltende Verbindungen in der (R)-Form oder (S)-Form zu synthetisieren.

Von besonderem Interesse ist die Herstellung von Diphosphanen der allgemeinen Formel (I), in denen Ar-Ar für 1,1'-Binaphthyl und das Diphosphan in der (R,S)-Form, in der (R)-Form oder (S)-Form vorliegt und n gegebenenfalls für 0 oder 1, insbesondere 0 steht. Diese Verbindungen sind nicht nur in der (R,S)-Form leicht zugänglich, sondern lassen sich auch in der (R)-Form ebenso wie in der (S)-Form mit vertretbarem Aufwand herstellen.

Ohne Anspruch auf Vollständigkeit zu erheben, seien als typische Vertreter der erfindungsgemäß herstellbaren Diphosphane der Formel (I) folgende Verbindungen genannt:
2-Diphenylphosphinomethyl-2'-diisopropylphosphinomethylbiphenyl
2-Diphenylphosphinomethyl-2'-dibutylphosphinomethylbiphenyl
2-Diphenylphosphinomethyl-2'-di-sec-butylphosphinomethylbiphenyl
2-Diphenylphosphinomethyl-2'-dicyclohexylphosphinomethylbiphenyl
2-Diphenylphosphinomethyl-2'-[bis-(2-tolyl)phosphinomethyl]biphenyl
2-Diphenylphosphinomethyl-2'-[bis(4-fluorphenyl)phosphinomethyl]biphenyl

2-Diphenylphosphinomethyl-2'-diisopropylphosphinomethyl-1,1'-binaphthyl
2-Diphenylphosphinomethyl-2'-di-sec-butylphosphinomethyl-1,1'-binaphthyl
2-Diphenylphosphinomethyl-2'-di-n-butylphosphinomethyl-1,1'-binaphthyl
2-Diphenylphosphinomethyl-2'-dicyclohexylphosphinomethyl-1,1'-binaphthyl
2-Diphenylphosphinomethyl-2'-[bis-(2-tolyl)phosphinomethyl]-1,1'-binaphthyl
2-Diphenylphosphinomethyl-2'-[bis(4-fluorphenyl)phosphinomethyl]-1,1'-binaphthyl
2-Diphenylphosphinomethyl-2'-methylphenylphosphinomethyl-1,1'-binaphthyl
2-Diphenylphosphinomethyl-2'-cyclohexylphenylphosphinomethyl-1,1'-binaphthyl

2-Diisopropylphosphinomethyl-2'-di-sec-butylphosphinomethyl-1,1'-binaphthyl
2-Diisopropylphosphinomethyl-2'-di-n-butylphosphinomethyl-1,1'-binaphthyl
2-Diisopropylphosphinomethyl-2'-dicyclohexylphosphinomethyl-1,1'-binaphthyl
2-Diisopropylphospinomethyl-2'-[bis-(2-tolyl)phosphinomethyl]-1,1'-binaphthyl
2-Diisopropylphosphinomethyl-2'-[bis-(4-fluorphenyl)phosphinomethyl]-1,1'-binaphthyl
2-Diisopropylphosphinomethyl-2'-methylphenylphosphinomethyl-1,1'-binaphthyl
2-Diisopropylphosphinomethyl-2'-cyclohexylphenylphosphinomethyl-1,1'-binaphthyl

2-Dicyclohexylphosphinomethyl-2'-di-sec-butylphosphinomethyl-1,1'-binaphthyl
2-Dicyclohexylphosphinomethyl-2'-di-n-butylphosphinomethyl-1,1'-binaphthyl
2-Dicyclohexylphosphinomethyl-2'-[bis(2-tolyl)phosphinomethyl]-1,1'-binaphthyl
2-Dicyclohexylphosphinomethyl-2'-methylphenylphosphinomethyl-1,1'-binaphthyl
2-Dicyclohexylphosphinomethyl-2'-cyclohexylphenylphosphinomethyl-1,1'-binaphthyl
2-Cyclohexylphenylphosphinomethyl-2'-methylphenylphosphinomethyl-1,1'-binaphthyl

Die vorliegende Erfindung betrifft ein Verfahren zur Herstellung von Diphosphanen der allgemeinen Formel (I),

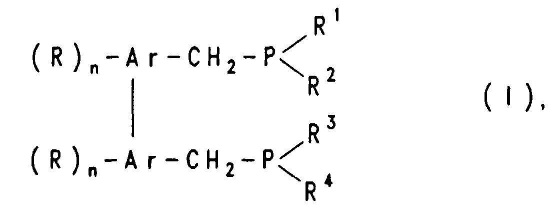

Es ist dadurch gekennzeichnet, daß man eine Verbindung der allgemeinen Formel (II) 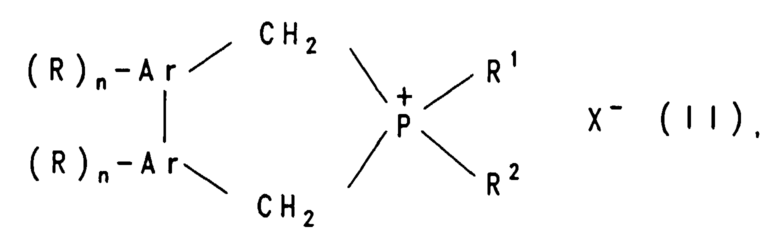 worin Ar-Ar für einen Biphenylrest, einen 1-Phenylnaphthylrest oder einen 1,1'-Binaphthylrest steht, die CH₂-Gruppen jeweils in ortho-Stellung zur Ar-Ar-Bindung angeordnet sind, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R⁵)ₘ stehen, wobei Ar¹ ein Phenyl-oder Naphthylrest ist, R⁵ für F, Cl, CF₃, SO₃H, SO₃M (M = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt, mit einer Verbindung der allgemeinen Formel (III) 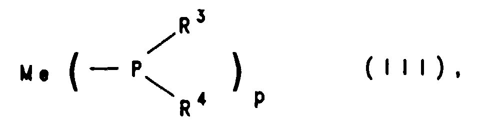 worin Me für ein Metall steht, R³ und R⁴ gleich oder verschieden sind und unabhängig voneinander aus der gleichen Gruppe von Resten wie R¹ und R² ausgewählt werden und p 1 oder 2 ist, in Anwesenheit eines Lösungsmittels bei -20 bis 160°C umsetzt.

Die Umsetzung verläuft entsprechend der nachfolgenden Gleichung: 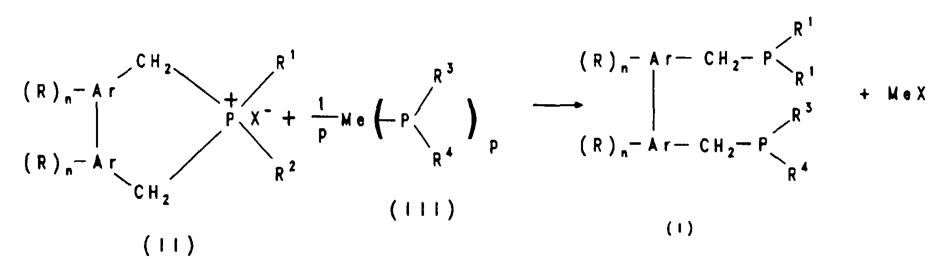 wobei R, n, Ar-Ar, R¹, R², R³, R⁴, X, Me und p die vorstehend genannte Bedeutung haben.

Ein Vorteil des erfindungsgemäßen Verfahrens besteht darin, daß man vergleichweise leicht zugängliche Ausgangsstoffe verwenden kann. Dies trifft sowohl auf die Verbindungen der Formel (II) als auch auf die Verbindungen der Formel (III) zu. Ein weiterer Vorteil ist, daß sich die Umsetzung ohne großen apparativen Aufwand realisieren läßt. Darüber hinaus verläuft die Reaktion mit hoher Selektivität und liefert die gewünschten Endprodukte (Verbindungen der Formel (I)) in hoher Ausbeute. Die Reinheit der dabei anfallenden Endprodukte ist üblicherweise so gut, daß man bereits durch einfaches Auskristallisieren aus der unmittelbar anfallenden Reaktionsmischung ein sehr reines Endprodukt erhalten kann. Auf eine zusätzliche Reinigung, die einen weiteren technischen Aufwand erfordert und in der Regel eine Verringerung der Ausbeute zur Folge hat, kann in diesem Falle verzichtet werden.

Das Verfahren ist nicht nur auf die Herstellung unsymmetrisch substituierter Diphosphane beschränkt. Es läßt sich mit gutem Erfolg auch für die Herstellung symmetrisch substituierte Diphosphane verwenden, in dem man beispielsweise Me-(PR¹R²)ₚ als Verbindung der Formel (III) verwendet.
Ein wesentlicher Vorzug des Verfahrens ist, daß sich gezielt unsymmetrisch substituierte Diphosphane der Formel (I) herstellen lassen, ohne in Kauf nehmen zu müssen, daß sich schwer auftrennbare Gemische symmetrisch substituierter Diphosphane und unsymmetrisch substituierter Diphosphane bilden. Derartige Gemische entstehen stets dann, wenn es nicht gelingt jeden einzelnen der Reste PR¹R² und PR³R⁴ mit hoher Selektivität in das Molekül einzufügen. In diesem Zusammenhang sei darauf aufmerksam gemacht, daß die eingangs erwähnte EP 0 326 286 lediglich ein Verfahren zur Herstellung symmetrisch substituierter Diphosphane mit zwei gleichen Resten YR¹R² (Y = P, As, Sb, Bi) beschreibt. Ein Verfahren zur Herstellung unsymmetrisch substituierter Diphosphane der Formel (I) ist der EP 0 326 286 nicht zu entnehmen.

Für das Verfahren spielen Verbindungen der Formel (II), worin Ar-Ar für einen Biphenylrest, einen 1-Phenylnaphthylrest oder einen 1,1-Binaphthylrest und R für einen Alkylrest oder Alkoxyrest mit jeweils 1 bis 4 Kohlenstoffatomen steht, eine besondere Rolle, da sie vergleichweise leicht zugänglich sind und in recht großer Auswahl zur Verfügung gestellt werden können. Dies trifft auch auf Verbindungen der Formel (II), worin n für 0 oder 1, insbesondere für 0, steht, zu.

Ein weiterer Vorteil des erfindungsgemäßen Verfahrens ist darin zu sehen, daß sich in einer Reihe von Fällen optisch aktive Diphosphane der Formel (I) sowohl in der (R)-Form als auch in der (S)-Form herstellen lassen.

Es ist allgemein bekannt, daß es sehr schwierig ist, ein racemisches Gemisch in enantiomerenreine oder auch nur weitgehend enantiomerenreine Verbindungen aufzutrennen. Derartige Racematspaltungen sind im allgemeinen mit einem sehr hohen Aufwand verbunden und führen darüber hinaus meist nicht zum Erfolg.

Durch Umsetzung der Verbindung der Formel (II) in der (R)-Form oder in der (S)-Form entsprechend der vorstehend beschriebenen Gleichung eröffnet das erfindungsgemäße Verfahren überraschenderweise einen sehr einfachen Weg zur direkten Herstellung von Diphosphanen der Formel (I) in der (R)-Form und der (S)-Form. Da sich die (R)- und die (S)-Form der als Ausgangsstoffe verwendeten Phosphoniumsalze gezielt synthetisieren läßt und die unter Ringöffnung Umsetzung der Phosphoniumsalze (II) nicht zu einer Racemisierung oder zu einer vollständigen Abspaltung einer Phosphor enthaltenden organischen Verbindung führt, kann auf eine aufwendige Racematspaltung, deren Erfolgsaussichten obendrein sehr ungewiß sind, verzichtet werden. Die enantiomerenreinen oder weitgehend enantiomerenreinen Phosphoniumsalze lassen sich durch einfaches Kristallisieren direkt aus dem Reaktionsgemisch gewinnen und durch Filtration isolieren.

Je nach Bedarf setzt man eine Verbindung der Formel (II) in der (R,S)-Form, in der (R)-Form oder in der (S)-Form ein und erhält das entsprechende Diphosphan in der (R,S)-Form, in der (R)-Form oder in der (S)-Form.

Von besonderem Interesse ist es, Verbindungen der Formel (II), worin Ar-Ar für 1,1-Binaphthyl steht, in der (R,S)-Form, in der (R)-Form und in der (S)-Form einzusetzen. Insbesondere ist es interessant, diese Verbindungen in der (R)-Form oder (S)-Form einzusetzen, um die entsprechenden Diphosphane herzustellen.

Man setzt in einer Vielzahl von Fällen eine Verbindung der Formel (II), worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen, ein.

Man setzt die Verbindung der Formel (II) mit einer Verbindung der Formel (III), worin Me, wie eingangs bereits erwähnt, für ein Metall, insbesondere für ein Alkalimetall oder Erdalkalimetall, beispielsweise für Li, Na, K, Mg oder Ca, vorzugsweise für Na oder K steht, um.

Man setzt in einer Vielzahl von Fällen eine Verbindung der Formel (III) ein, worin R³ und R⁴ gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, oder R³ und R⁴ zusammen mit dem P-Atom einen Ring bilden und für CH₂-Ar(R)ₙ-Ar(R)ₙ-CH₂ stehen.

Insbesondere setzt man eine Verbindung der Formel (III) ein, worin R³ und R⁴ gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht.

Man führt die Umsetzung in Anwesenheit eines Lösungsmittels, insbesondere eines unter den Bedingungen der Reaktion inerten organischen Lösungsmittels durch.
Üblicherweise verwendet man ein polar aprotisches Lösungsmittel oder ein Gemisch polar aprotischer Lösungsmittel als Lösungsmittel. Geeignete polar aprotische Lösungsmittel sind, ohne Anspruch auf Vollständigkeit zu erheben, N,N-Dimethylformamid, Tetrahydrofuran, Dioxan oder Gemische derselben. In einer Reihe von Fällen hat sich N,N-Dimethylformamid als besonders geeignetes Lösungsmittel erwiesen.

Man kann sowohl die Verbindung der Formel (II) als auch die Verbindung der Formel (III) in dem Lösungsmittel oder Lösungsmittelgemisch suspendieren oder lösen und anschließend umsetzen.
Üblicherweise versetzt man die Verbindung der Formel (II) mit dem Lösungsmittel oder Lösungsmittelgemisch, legt diese Lösung oder Suspension vor und setzt die Verbindung der Formel (III) in gelöster Form zu.
Zur Durchführung der Reaktion ist für eine gute Durchmischung, beispielsweise durch Rühren, zu sorgen.
In der Regel genügt es, die Verbindung der Formel (II), also das Phosphoniumsalz, und die Verbindung der Formel (III), also das Phosphid, in einem Molverhältnis von (1 bis 2):1, insbesondere (1 bis 1,2):1 umzusetzen.
Wie zuvor erwähnt, führt man die Umsetzung bei -20 bis 160°C durch. Temperaturen von 0 bis 120, insbesondere 10 bis 100°C haben sich für Durchführung der Reaktion häufig als ausreichend erwiesen.
Nach Abschluß der Umsetzung wird das Lösungsmittel durch Destillation unter reduziertem Druck entfernt und dem anfallenden Reaktionsprodukt, falls erforderlich und gewünscht, ein unpolares Lösungsmittel zugesetzt. Als unpolares Lösungsmittel eignen sich Toluol, o-Xylol, m-Xylol, p-Xylol, Gemische isomerer Xylole, Ethylbenzol, Mesitylen, aliphatische Kohlenwasserstoffe oder Gemische dieser Lösungsmittel.

Der Zusatz des unpolaren Lösungsmittels dient dazu, das gewünschte Wertprodukt zu lösen und es von ungelösten Salzen mittels Filtration abzutrennen. Das anfallende Filtrat wird eingeengt, wobei das gewünschte Wertprodukt bereits in hoher Reinheit auskristallisiert.

Das erfindungsgemäße Verfahren läßt sich generell kontinuierlich oder diskontinuierlich durchführen. Es eignet sich insbesondere für eine diskontinuierliche Durchführung.

Die Diphosphane der Formel (I) eignen sich als Antioxidantien und als Bestandteile von Katalysatorsystemen.

Die nachfolgenden Beispiele beschreiben die Erfindung, ohne sie zu beschränken.

### Experimenteller Teil

### Beispiel 1

### Herstellung von (R,S)-2,2'-Bis-(diphenylphosphinomethyl)-1,1'-binaphthyl

1,4 g (7,4 mMol) Diphenylphosphin werden in 20 ml N,N-Dimethylformamid (DMF) gelöst und mit 0,36 g Natriumhydrid (50 %ige Suspension in Paraffinöl) versetzt und 12 Stunden bei Raumtemperatur gerührt. Diese Lösung der Verbindung der Formel (III) wird dann zu 4,0 g (7,3 mMol) (R,S)-4,4-Diphenyl-4,5-dihydro-3H-dinaphtho[2,1-c:1',2'-e]phosphepiniumbromid (Verbindung der Formel (II)), welches in 40 ml DMF suspendiert ist, langsam zugetropft. Die erhaltene rote Lösung wird 24 Stunden bei Raumtemperatur gerührt. Anschließend wird das DMF bei 50°C/1,3·10⁻² mbar (50°C/10⁻² Torr) entfernt. Der Rückstand wird in 120 ml Toluol aufgenommen, mit 0,3 ml Wasser versetzt und 30 Minuten gerührt. Der ausgefallene Niederschlag wird abfiltriert (0,9 g) und das Toluol bei 50°C/1,3·10⁻² mbar (50°C/10⁻² Torr) entfernt. Zur Reinigung wird der Rückstand mit 10 ml Aceton versetzt und die erhaltenen Kristalle unter Schutzgas abfiltriert. Die Aceton-Mutterlauge wird mit 4 ml i-Propanol versetzt und mehrere Stunden auf 0°C gekühlt. Der erhaltene Niederschlag wird abermals abfiltriert.

| | |
|---|---|
| Ausbeute | 3,4 g (71,3 %) |
| Schmelzpunkt | 156°C |
| ³¹P-NMR-Spektrum | (CDCl₃) - 12,3 ppm |

### Beispiel 2

### Herstellung von (R,S)-2-(Diphenylphosphino)-2'-(dicyclohexylphosphino)-methyl-1,1'-binaphthyl

3 g (5,4 mMol) (R,S)-4,4-Dicyclohexyl-4,5-dihydro-3H-dinaphtho-[2,1-c:1', 2'-e]-phosphepiniumbromid (Verbindung der Formel (II)) werden analog Beispiel 1 umgesetzt.
Das Rohprodukt wird mit 8 ml n-Heptan in der Siedehitze gelöst und mehrere Stunden zur Kristallisation stehengelassen.

| | |
|---|---|
| Ausbeute | 2,5 g (70, 1 %) |
| Schmelzpunkt | 121 °C |
| ³¹P-NMR-Spektrum | (CDCl₃) + 1,32 ppm, -12,3 ppm |
| Massenspektrum | M⁺ = 662 |

### Beispiel 3

### Herstellung von 2-(Diphenylphosphino)-2'-(diisopropylphosphino)-methyl-1,1'-binaphthyl

4 g (8,4 mMol) (R,S)-4,4-Diisopropyl-4,5-dihydro-3H-dinaphtho-[2,1-c:1', 2'-e]phosphepiniumbromid (Verbindung der Formel (II)) werden analog Beispiel 1 umgesetzt. Das Rohprodukt wird mit 25 ml n-Heptan in der Siedehitze gelöst und mehrere Stunden stehengelassen. Die überstehende Lösung wird abdekantiert und das erhaltene Öl bei 70°C/1,3·10⁻² mbar (70°C/10⁻² Torr) getrocknet.

| | |
|---|---|
| Ausbeute | 3,6 g (75,0 %); Öl |
| ³¹P-NMR-Spektrum | (CDCl₃) + 9,0 ppm, -12,4 ppm |
| Massenspektrum | M⁺ = 583 |

### Beispiel 4

### Herstellung von (S)-2,2'-Bis-(diphenylphosphinomethyl)-1,1'-binaphthyl

1 g (1,83 mMol) (S)-4,4-Diphenyl-4,5-dihydro-3H-dinaphtho-[2,1-C:1',2'-e]-phosphepiniumbromid (Verbindung der Formel (II)) werden analog Beispiel 1 zur Reaktion gebracht.

| | |
|---|---|
| Ausbeute | 710 mg (60 %) |
| Schmelzpunkt | 155-156°C |
| ³¹P-NMR-Spektrum | (CDCl₃) - 12.3 ppm |

[α]²⁰_{D} = -14.7° (gemessen in Dichlormethan)

### Beispiel 5

### Herstellung von (R,S)-2,2'-Bis-(diphenylphosphinomethyl)-1,1'-binaphthyl

35 ml einer 0,5 molaren Lösung von Kaliumdiphenylphosphid in Tetrahydrofuran (THF) entsprechend 17,5 mMol Kaliumdiphenylphosphid (Verbindung der Formel (III)) werden vorgelegt und mit 100 ml N,N-Dimethylformamid (DMF) absolut bei Raumtemperatur versetzt. Anschließend werden 9 g (16,14 mMol) (R,S)-4,4-Diphenyl-4,5-dihydro-3H-dinaphtho[2,1-c:1',2'-e]phosphepiniumbromid (Verbindung der Formel (II)) als Feststoff zugegeben. Die dabei sich bildende rote Lösung wird 12 Stunden bei Raumtemperatur gerührt. Danach wird das aus THF und DMF bestehende Lösungsmittelgemisc bei 50°C/1,3·10⁻² mbar (50°C/10⁻² Torr) entfernt. Der Rückstand wird in 100 ml Dichlormethan aufgenommen und der Feststoff abfiltriert. Das Dichlormethan wird bei 30°C/1,3·10⁻² mbar (30°C/10⁻² Torr) entfernt. Der Rückstand wird in 20 ml iso-Propanol erhitzt und zur Kristallisation stehen gelassen. Die überstehende Lösung wird abdekantiert. Der Rückstand wird in 35 ml n-Heptan aufgenommen und in der Siedehitze von noch vorhandenem Feststoff abfiltriert. Zur Kristallisation des Produktes läßt man langsam abkühlen.

| | |
|---|---|
| Ausbeute | 8,0 g (75 %) |
| Schmelzpunkt | 125°C |
| ³¹P-NMR-Spektrum | (CDCl₃) + 1,34 ppm, -12,3 ppm |

## Patentansprüche

1. Verfahren zur Herstellung von Diphosphanen der allgemeinen Formel (I), 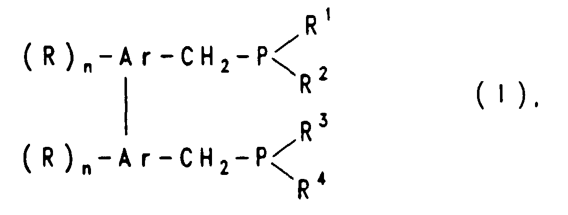 dadurch gekennzeichnet, daß man eine Verbindung der allgemeinen Formel (II) 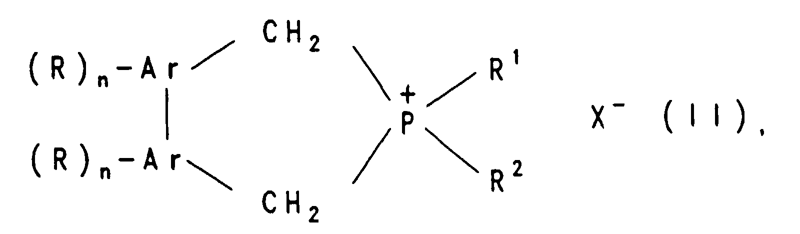 worin Ar-Ar für einen Biphenylrest, einen 1-Phenylnaphthylrest oder einen 1,1'-Binaphthylrest steht, die CH₂-Gruppen jeweils in ortho-Stellung zur Ar-Ar-Bindung angeordnet sind, R für F, einen Alkylrest oder Alkoxyrest mit jeweils 1 bis 8 Kohlenstoffatomen steht, n eine ganze Zahl von 0 bis 4 ist, R¹ und R² gleich oder verschieden sind und unabhängig voneinander für einen Alkylrest mit 1 bis 10 Kohlenstoffatomen, einen cycloaliphatischen Rest mit 5 bis 10 Kohlenstoffatomen, oder für einen Rest Ar¹-(R⁵)ₘ stehen, wobei Ar¹ ein Phenyl- oder Naphthylrest ist, R⁵ für F, Cl, CF₃, SO₃H, SO₃M (M = Li, Na oder K), einen Dialkylaminorest mit 2 bis 8 Kohlenstoffatomen, einen Alkylrest oder Alkoxyrest mit jeweils 1 bis 8 Kohlenstoffatomen steht und m eine ganze Zahl von 0 bis 5 ist, oder R¹ und R² zusammen mit dem P-Atom einen Ring mit 4 bis 8 Gliedern bilden, woran gegebenenfalls ein oder zwei aromatische, 6 bis 10 Kohlenstoffatome umfassende Ringe oder Ringsysteme anneliert sind, und X⁻ ein einwertiges Anion oder das Äquivalent eines mehrwertigen Anions einer Mineralsäure, Carbonsäure, Sulfonsäure oder eines Alkohols darstellt, mit einer Verbindung der allgemeinen Formel (III) 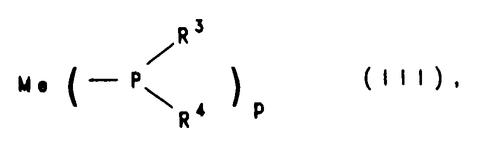 worin Me für ein Metall steht, R³ und R⁴ gleich oder verschieden sind und unabhängig voneinander aus der gleichen Gruppe von Resten wie R¹ und R² ausgewählt werden und p 1 oder 2 ist, in Anwesenheit eines Lösungsmittels bei -20 bis 160°C umsetzt.

2. Verfahren nach Anspruch 1, dadurch gekennzeichnet, daß man eine Verbindung der Formel (II), worin Ar-Ar für einen Biphenylrest, einen 1-Phenylnaphthylrest oder einen 1,1'-Binaphthylrest und R für einen Alkylrest oder Alkoxyrest mit jeweils 1 bis 4 Kohlenstoffatomen steht, einsetzt.

3. Verfahren nach Anspruch 1 oder 2, dadurch gekennzeichnet, daß man eine Verbindung der Formel (II), worin n für 0 oder 1 steht, einsetzt.

4. Verfahren nach einem oder mehreren der Ansprüche 1 bis 3, dadurch gekennzeichnet, daß man eine Verbindung der Formel (II), worin n für 0 steht, einsetzt.

5. Verfahren nach einem oder mehreren der Ansprüche 1 bis 4, dadurch gekennzeichnet, daß man eine Verbindung der Formel (II) in der (R,S)-Form, in der (R)-Form oder in der (S)-Form einsetzt.

6. Verfahren nach einem oder mehreren der Ansprüche 1 bis 5, dadurch gekennzeichnet, daß man eine Verbindung der Formel (II), worin Ar-Ar für 1,1'-Binaphthyl steht, in der (R,S)-Form, in der (R)-Form oder in der (S)-Form einsetzt.

7. Verfahren nach einem oder mehreren der Ansprüche 1 bis 6, dadurch gekennzeichnet, daß man eine Verbindung der Formel (II), worin R¹ und R² gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, oder R¹ und R² zusammen mit dem P-Atom einen Ring bilden und für CH₂-Ar(R)ₙ-Ar(R)ₙ-CH₂ stehen, einsetzt.

8. Verfahren nach einem oder mehreren der Ansprüche 1 bis 7, dadurch gekennzeichnet, daß man eine Verbindung der Formel (III), worin Me für Li, Na, K, Mg oder Ca, insbesondere für Na oder K steht, einsetzt.

9. Verfahren nach einem oder mehreren der Ansprüche 1 bis 8, dadurch gekennzeichnet, daß man eine Verbindung der Formel (III), worin R³ und R⁴ gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, oder R³ und R⁴ zusammen mit dem P-Atom einen Ring bilden und für CH₂-Ar(R)ₙ-Ar(R)ₙ-CH₂ stehen, einsetzt.

10. Verfahren nach einem oder mehreren der Ansprüche 1 bis 9, dadurch gekennzeichnet, daß man eine Verbindung der Formel (III), worin R³ und R⁴ gleich oder verschieden sind und unabhängig voneinander für einen Alkylrest mit 1 bis 6 Kohlenstoffatomen, einen cycloaliphatischen Rest mit 5 bis 6 Kohlenstoffatomen oder für einen Rest Ar¹-(R⁵)ₘ stehen, wobei Ar¹ ein Phenylrest ist, R⁵ für F, CF₃ oder einen Alkylrest mit 1 bis 4 Kohlenstoffatomen und m für 0 oder 1 steht, einsetzt.

11. Verfahren nach einem oder mehreren der Ansprüche 1 bis 10, dadurch gekennzeichnet, daß man ein polar aprotisches Lösungsmittel oder ein Gemisch polar aprotischer Lösungsmittel als Lösungsmittel einsetzt.

12. Verfahren nach einem oder mehreren der Ansprüche 1 bis 11, dadurch gekennzeichnet, daß man N,N-Dimethylformamid, Tetrahydrofuran, Dioxan oder Gemische derselben als Lösungsmittel einsetzt.

13. Verfahren nach einem oder mehreren der Ansprüche 1 bis 12, dadurch gekennzeichnet, daß man N,N-Dimethylformamid als Lösungsmittel einsetzt.

14. Verfahren nach einem oder mehreren der Ansprüche 1 bis 13, dadurch gekennzeichnet, daß man die Verbindung der Formel (II) und die Verbindung der Formel (III) in einem Molverhältnis von (1 bis 2):1, insbesondere (1 bis 1,2):1 einsetzt.

15. Verfahren nach einem oder mehreren der Ansprüche 1 bis 14, dadurch gekennzeichnet, daß man die Umsetzung bei 0 bis 120, insbesondere 10 bis 100 °C durchführt.

16. Verwendung der Diphosphane der allgemeinen Formel (I) nach Anspruch 1 als Antioxidantien.

## Claims

1. A process for preparing diphosphanes of the formula (I) 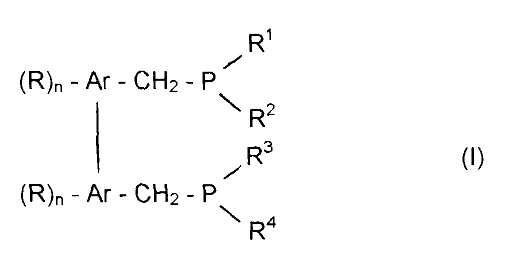 characterised in that a compound of the formula (II) 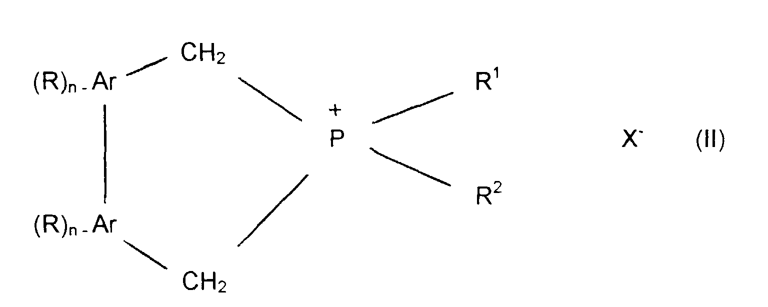 where Ar-Ar stands for a biphenyl radical, a 1-phenylnaphthyl radical or a 1,1'-binaphthyl radical, the CH₂ groups are each arranged in the ortho position to the Ar-Ar bond, R stands for F, an alkyl radical or alkoxy radical, each having 1 to 8 carbon atoms, n is an integer from 0 to 4, R¹ and R² are the same or different and independently of each other stand for an alkyl radical having 1 to 10 carbon atoms, a cycloaliphatic radical having 5 to 10 carbon atoms, or for a radical Ar¹-(R⁵)ₘ where Ar¹ is a phenyl or naphthyl radical, R⁵ stands for F, Cl, CF₃, SO₃H, SO₃M (M = Li, Na or K), a dialkylamino radical having 2 to 8 carbon atoms, an alkyl radical or alkoxy radical, each having 1 to 8 carbon atoms and m is an integer from 0 to 5, or R¹ and R² together with the P atom form a ring with 4 to 8 members to which optionally one or two aromatic rings or ring systems comprising 6 to 10 carbon atoms are fused, and X⁻ represents a monovalent anion or the equivalent of a polyvalent anion of a mineral acid, carboxylic acid, sulfonic acid or an alcohol, is reacted in the presence of a solvent at -20 to 160°C with a compound of the formula (III) 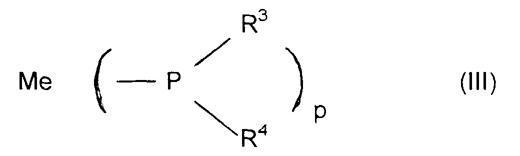 where Me stands for a metal, R³ and R⁴ are the same or different and independently of each other are selected from the same group of radicals as R¹ and R² and p is 1 or 2.

2. The process according to claim 1, characterised in that a compound of the formula (II) is used, where Ar-Ar stands for a biphenyl radical, a 1-phenylnaphthyl radical or a 1,1'-binaphthyl radical and R stands for an alkyl radical or alkoxy radical, each having 1 to 4 carbon atoms.

3. The process according to claim 1 or 2, characterised in that a compound of the formula (II) is used, where n stands for 0 or 1.

4. The process according to one or more of claims 1 to 3, characterised in that a compound of the formula (II) is used, where n stands for 0.

5. The process according to one or more of claims 1 to 4, characterised in that a compound of the formula (II) is used in the (R,S) form, in the (R) form or in the (S) form.

6. The process according to one or more of claims 1 to 5, characterised in that a compound of the formula (II) where Ar-Ar stands for 1,1'-binaphthyl is used in the (R,S) form, in the (R) form or in the (S) form.

7. The process according to one or more of claims 1 to 6, characterised in that a compound of the formula (II) where R¹ and R² are the same or different and independently of each other stand for an alkyl radical having 1 to 6 carbon atoms, a cycloaliphatic radical having 5 to 6 carbon atoms, or for a radical Ar¹-(R⁵)_{m,} where Ar¹ is a phenyl radical, R⁵ stands for F, CF₃, or an alkyl radical having 1 to 4 carbon atoms and m stands for 0 or 1, or R¹ and R² together with the P atom form a ring and stand for CH₂-Ar(R)ₙ-Ar(R)ₙ-CH_{2.}

8. The process according to one or more of claims 1 to 7, characterised in that a compound of the formula (III) is used where Me stands for Li, Na, K, Mg or Ca, in particular for Na or K.

9. The process according to one or more of claims 1 to 8, characterised in that a compound of the formula (III) where R³ and R⁴ are the same or different and independently of each other stand for an alkyl radical having 1 to 6 carbon atoms, a cycloaliphatic radical having 5 to 6 carbon atoms, or for a radical Ar¹-(R⁵)_{m,} where Ar¹ is a phenyl radical, R⁵ stands for F, CF₃, or an alkyl radical having 1 to 4 carbon atoms and m stands for 0 or 1, or R³ and R⁴ together with the P atom form a ring and stand for CH₂-Ar(R)ₙ-Ar(R)ₙ-CH₂.

10. The process according to one or more of claims 1 to 9, characterised in that a compound of the formula (III) where R³ and R⁴ are the same or different and independently of each other stand for an alkyl radical having 1 to 6 carbon atoms, a cycloaliphatic radical having 5 to 6 carbon atoms, or for a radical Ar¹-(R⁵)_{*m*}_{,} where Ar¹ is a phenyl radical, R⁵ stands for F, CF₃, or an alkyl radical having 1 to 4 carbon atoms and m stands for 0 or 1.

11. The process according to one or more of claims 1 to 10, characterised in that a polarly aprotic solvent or a mixture of polarly aprotic solvents is used as solvent.

12. The process according to one or more of claims 1 to 11, characterised in that N,N-dimethylformamide, tetrahydrofuran, dioxane or mixtures thereof is used as solvent.

13. The process according to one or more of claims 1 to 12, characterised in that N,N-dimethylformamide is used as solvent.

14. The process according to one or more of claims 1 to 13, characterised in that the compound of the formula (II) and the compound of the formula (III) are used in a molar ratio of (1 to 2) : 1, in particular (1 to 1.2) : 1.

15. The process according to one or more of claims 1 to 14, characterised in that the reaction takes place at 0 to 120, in particular 10 to 100°C.

16. The use of the diphosphines of the formula (I) according to claim 1 as antioxidants.

## Revendications

1. Procédé de préparation de diphosphanes de formule générale (I) 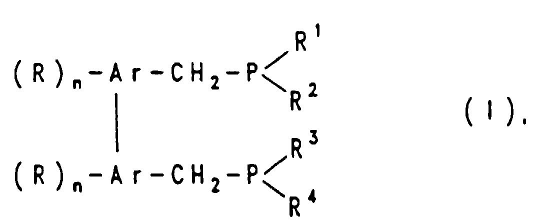 caractérisé en ce que l'on fait réagir un composé de formule générale (II) 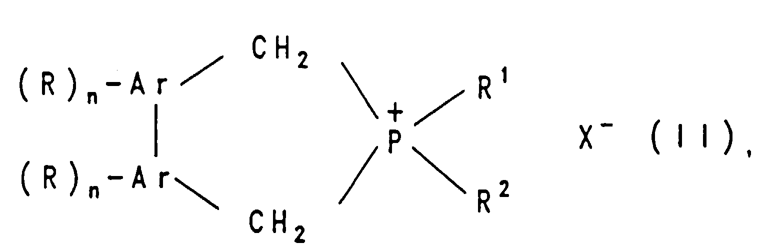 dans laquelle Ar-Ar représente un reste biphényle, un reste 1-phénylnaphtyle ou un reste 1,1'-binaphtyle, les groupes CH₂ sont chacun en position ortho par rapport à la liaison Ar-Ar, R représente F, un reste alkyle ou un reste alcoxy ayant chacun 1 à 8 atomes de carbone, n est un nombre entier de 0 à 4, R¹ et R² sont identiques ou différents et représentent indépendamment l'un de l'autre un reste alkyle de 1 à 10 atomes de carbone, un reste cycloaliphatique de 5 à 10 atomes de carbone, ou un reste Ar¹-(R⁵)ₘ dans lequel Ar¹ est un reste phényle ou naphtyle, R⁵ est F, Cl, CF₃, SO₃H, SO₃M (M = Li, Na ou K), un reste dialkylamino de 2 à 8 atomes de carbone, un reste alkyle ou un reste alcoxy ayant chacun 1 à 8 atomes de carbone, et m est un nombre entier de 0 à 5, ou R¹ et R² forment ensemble, avec l'atome de phosphore, un cycle de 4 à 8 chaînons auquel sont éventuellement condensés un ou deux cycles ou systèmes cycliques aromatiques de 6 à 10 atomes de carbone, et X⁻ représente un anion monovalent ou l'équivalent d'un anion polyvalent d'un acide inorganique, d'un acide carboxylique, d'un acide sulfonique ou d'un alcool,
avec un composé de formule générale (III) 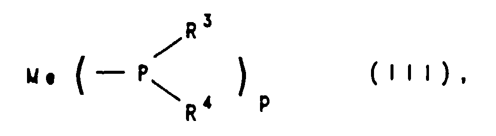 dans laquelle Me représente un métal, R³ et R⁴ sont identiques ou différents et sont choisis indépendamment l'un de l'autre dans le même groupe de restes que R¹ et R², et p est 1 ou 2, en présence d'un solvant, à une température comprise entre -20 et 160°C.

2. Procédé selon la revendication 1, caractérisé en ce que l'on utilise un composé de formule (II) dans laquelle Ar-Ar représente un reste biphényle, un reste 1-phénylnaphtyle ou un reste 1,1'-binaphtyle, et R représente un reste alkyle ou un reste alcoxy ayant chacun 1 à 4 atomes de carbone.

3. Procédé selon la revendication 1 ou 2, caractérisé en ce que l'on utilise un composé de formule (II) dans laquelle n est 0 ou 1.

4. Procédé selon l'une ou plusieurs des revendications 1 à 3, caractérisé en ce que l'on utilise un composé de formule (II) dans laquelle n est 0.

5. Procédé selon l'une ou plusieurs des revendications 1 à 4, caractérisé en ce que l'on utilise un composé de formule (II) sous forme (R,S), sous forme (R) ou sous forme (S).

6. Procédé selon l'une ou plusieurs des revendications 1 à 5, caractérisé en ce que l'on utilise un composé de formule (II) dans laquelle Ar-Ar représente un reste 1,1'-binaphtyle, sous forme (R,S), sous forme (R) ou sous forme (S).

7. Procédé selon l'une ou plusieurs des revendications 1 à 6, caractérisé en ce que l'on utilise un composé de formule (II) dans laquelle R¹ et R² sont identiques ou différents et représentent indépendamment l'un de l'autre un reste alkyle de 1 à 6 atomes de carbone, un reste cycloaliphatique de 5 à 6 atomes de carbone ou un reste Ar¹-(R⁵)ₘ, où Ar¹ est un reste phényle, R⁵ est F, CF₃ ou un reste alkyle de 1 à 4 atomes de carbone et m est 0 ou 1, ou R¹ et R² forment ensemble un cycle avec l'atome de phosphore et représentent CH₂-Ar(R)ₙ-Ar(R)ₙ-CH₂.

8. Procédé selon l'une ou plusieurs des revendications 1 à 7, caractérisé en ce que l'on utilise un composé de formule (III) dans laquelle Me représente Li, Na, K, Mg ou Ca, en particulier Na ou K.

9. Procédé selon l'une ou plusieurs des revendications 1 à 8, caractérisé en ce que l'on utilise un composé de formule (III) dans laquelle R³ et R⁴ sont identiques ou différents et représentent indépendamment l'un de l'autre un reste alkyle de 1 à 6 atomes de carbone, un reste cycloaliphatique de 5 à 6 atomes de carbone ou un reste Ar¹-(R⁵)ₘ, où Ar¹ est un reste phényle, R⁵ est F, CF₃ ou un reste alkyle de 1 à 4 atomes de carbone et m est 0 ou 1, ou R³ et R⁴ forment ensemble un cycle avec l'atome de phosphore et représentent CH₂-Ar(R)ₙ-Ar(R)ₙ-CH₂.

10. Procédé selon l'une ou plusieurs des revendications 1 à 9, caractérisé en ce que l'on utilise un composé de formule (III) dans laquelle R³ et R⁴ sont identiques ou différents et représentent indépendamment l'un de l'autre un reste alkyle de 1 à 6 atomes de carbone, un reste cycloaliphatique de 5 à 6 atomes de carbone ou un reste Ar¹-(R⁵)ₘ, où Ar¹ est un reste phényle, R⁵ est F, CF₃ ou un reste alkyle de 1 à 4 atomes de carbone et m est 0 ou 1.

11. Procédé selon l'une ou plusieurs des revendications 1 à 10, caractérisé en ce que l'on utilise comme solvant un solvant aprotique polaire ou un mélange de solvants aprotiques polaires.

12. Procédé selon l'une ou plusieurs des revendications 1 à 11, caractérisé en ce que l'on utilise comme solvant du N,N-diméthylformamide, du tétrahydrofurane, du dioxane ou des mélanges de ces solvants.

13. Procédé selon l'une ou plusieurs des revendications 1 à 12, caractérisé en ce que l'on utilise du N,N-diméthylformamide comme solvant.

14. Procédé selon l'une ou plusieurs des revendications 1 à 13, caractérisé en ce que l'on utilise le composé de formule (II) et le composé de formule (III) en un rapport molaire de (1 à 2):1, en particulier de (1 à 1,2):1.

15. Procédé selon l'une ou plusieurs des revendications 1 à 14, caractérisé en ce que l'on effectue la réaction à une température de 0 à 120°C, en particulier de 10 à 100°C.

16. Utilisation des diphosphanes de formule générale (I) selon la revendication 1 comme antioxydants.
